# EUROPÄISCHE PATENTANMELDUNG

(11) **EP 1 659 421 A2**
(43) Veröffentlichungstag der Anmeldung: **24.05.2006**
(21) Anmeldenummer: 05022304.9
(22) Anmeldetag: 13.10.2005
(51) Int. Cl.: G01V 8/10

(54) **Sensor zur Überwachung des Nahbereichs an einem Kraftfahrzeug**

(30) Priorität: 18.11.2004 DE 102004055680
(71) Anmelder: Delphi Technologies, Inc., Troy, Michigan 48007 (US)
(72) Erfinder: Wemken, Franz, 55595 Weinsheim (DE); Leis, Edmund, 55116 Mainz (DE)
(74) Vertreter: Becker, Bernd

(57) **Zusammenfassung**

Ein Sensor (1) zur Überwachung des Nahbereichs an einem Kraftfahrzeug (10) weist einen hinter einer Linse (2) angeordneten Infrarot-Emitter (3) und eine Empfangseinrichtung (4) für reflektierte Infrarotstrahlen sowie eine Auswerteeinheit (5) zur Erfassung des Vorhandenseins eines Objekts (13) im Nahbereich auf, wobei von der Auswerteeinheit (5) ein Signal an ein Steuergerät (19) im Kraftfahrzeug (10) weiterleitbar ist. Um den Sensor (1) auch mit einer verschmutzten Linse (2) betreiben zu können, sind ein Infrarot-Emitter (6) und eine Empfangseinrichtung (7) zur Messung einer Transparenz der Linse (2) vorgesehen, wobei bei verringerter Transparenz von der Auswerteeinheit (5) eine Leistung des Infrarot-Emitters (3) zur Überwachung des Nahbereichs steigerbar ist.

## Beschreibung

Die Erfindung bezieht sich auf einen Sensor zur Überwachung des Nahbereichs an einem Kraftfahrzeug mit einem hinter einer Linse angeordneten Infrarot-Emitter und einer Empfangseinrichtung für reflektierte Infrarotstrahlen und mit einer Auswerteeinheit zur Erfassung des Vorhandenseins eines Objekts im Nahbereich, wobei von der Auswerteeinheit ein Signal an ein Steuergerät im Kraftfahrzeug weiterleitbar ist.

Moderne Cabriolets oder Roadster verfügen über elektrisch betätigbare Verdecke. Ein derartiges Verdeck in Stoffausführung oder als Falt- oder Klappverdeck aus Metall und/oder Kunststoff wird z. B. beim Abstellen und Verlassen des Kraftfahrzeugs vom Nutzer geschlossen. Hierzu kann er entweder ein Betätigungselement am Armaturenbrett des Kraftfahrzeugs bedienen oder, nachdem er aus seinem Kraftfahrzeug ausgestiegen ist, die entsprechenden Elektromotoren zur Betätigung des Verdecks mit einer in seinem Kraftfahrzeugschlüssel integrierten Fernbedienung ansteuern. Diese Fernbedienung kann mit Infrarotstrahlen, elektromagnetischen Funkwellen oder Ultraschallimpulsen entsprechende Signale an eine Empfängereinheit im Kraftfahrzeug übermitteln, die an ein zentrales Steuergerät im Kraftfahrzeug zur Steuerung aller Funktionen weitergeleitet werden. Nachfolgend werden von dem Steuergerät die Elektromotoren zum Schließen des Verdecks angesteuert. Möchte der Nutzer wieder in sein Kraftfahrzeug einsteigen, kann der Vorgang in umgekehrte Reihenfolge zum Öffnen des Verdecks ablaufen.

Schließt der Nutzer sein Verdeck, nachdem er bereits aus dem Kraftfahrzeug ausgestiegen ist, entfernt er sich häufig bereits während des Schließvorgangs, da das Schließen bei modernen Kraftfahrzeugen keine zusätzlichen vom Nutzer auszuführenden Handgriffe erfordert. Somit überwacht der Nutzer den ordnungsgemäßen Schließvorgang nicht mehr selbst. Während dieses Schließvorgangs, bei dem sich der Nutzer bereits vom Kraftfahrzeug entfernt hat, ist es aber nicht auszuschließen, dass sich eine Person oder, falls das Kraftfahrzeug in einem Waldstück abgestellt ist, ein Tier dem Kraftfahrzeug nähert und die Person beispielsweise mit einer Hand zwischen das sich schließende Verdeck und beispielsweise den oberen Querholm an der Windschutzscheibe eingreift. Dies kann insbesondere bei einem zufällig vorbeikommenden Kind der Fall sein. Hierdurch könnte es, auch wenn die Elektromotoren zur Betätigung des Verdecks über eine Abschaltautomatik, die in Form ein Lastbegrenzung ausgeführt ist, verfügen, trotzdem dazu kommen, dass eine Person durch das sich schließende oder sich öffnende Verdeck verletzt wird.

Zur Vermeidung dieses Problems sind Sensoren zur Überwachung eines Nahbereichs an einem Kraftfahrzeug bekannt. Diese Sensoren bestehen im Wesentlichen aus einem Infrarot-Emitter, der Infrarotstrahlen in einen Nahbereich um das Kraftfahrzeug herum aussendet, beispielsweise entlang einer Seite des Kraftfahrzeugs mit einer seitlichen Ausdehnung von ein bis zwei Meter. Mit diesem üblicherweise hinter einer schützenden Linse aus Glas oder einem geeigneten Kunststoffmaterial angeordneten Infrarot-Emitter kann ein so genannter Infrarotschleier, z. B. entlang einer Längsseite des Kraftfahrzeugs, erzeugt werden. Sobald sich eine Person, ein Tier oder ein sonstiges bewegliches Objekt während des Öffnungs- oder Schließvorgangs des Verdecks in den Bereich des Infrarotschleiers hineinbewegt, werden von diesem Objekt die Infrarotstrahlen reflektiert und von einer dem Sensor zugeordneten Empfangseinrichtung für reflektierte Infrarotstrahlen erfasst. Diese Empfangseinrichtung ist ebenfalls hinter der Linse angeordnet. Zusätzlich verfügt der Sensor über eine Auswerteeinheit, die insbesondere aus der Signalstärke der von der Empfangseinrichtung gemessenen Intensität der reflektierten Infrarotstrahlen darauf schließt, ob sich ein bewegliches Objekt in den zu überwachenden Nahbereich hineinbewegt. Sobald dies von der Auswerteeinheit festgestellt wird, leitet diese ein entsprechendes Signal beispielsweise an das zentrale Steuergerät, das daraufhin unmittelbar den Öffnungs-oder Schließvorgang des Verdecks unterbricht, um eine Verletzung einer Person, die den Nahbereich um das Kraftfahrzeug betreten hat, zu vermeiden. Hierbei kann simultan auch ein optisches und/oder akustisches Warnsignal ausgegeben werden, um die Person zu veranlassen, den Nahbereich wieder zu verlassen. Auch kann beispielsweise ein Funksignal an die Fernbedingung des Nutzers übermittelt werden, um ihn auf den Umstand der Unterbrechung des Öffnungs- oder Schließvorgangs hinzuweisen.

Besonders bei einer Verwendung des Kraftfahrzeugs außerhalb des üblichen Straßennetzes treten beispielsweise durch Schlammpfützen oder dergleichen starke Verunreinigungen der Außenhaut des Kraftfahrzeugs auf. Dabei kann insbesondere die Linse des Sensors zur Überwachung des Nahbereichs durch Schmutzablagerungen verdreckt sein, wodurch die Infrarotstrahlen diese Schmutzschicht nicht mehr oder nur noch teilweise durchdringen oder reflektierte Infrarotstrahlen nicht mehr zuverlässig von der Empfangseinrichtung detektierbar sind. Somit kann die Funktionalität des Sensors beeinträchtigt sein und trotz des Sensors eine Person beim Öffnen oder Schließen des Verdecks verletzt werden.

Es ist Aufgabe der Erfindung, einen Sensor zur Überwachung des Nahbereichs um ein Kraftfahrzeug der eingangs genannten Art zu schaffen, der auch bei einer allgemeinen Verschmutzung des Kraftfahrzeugs den Nahbereich um das Kraftfahrzeug zuverlässig überwacht.

Erfindungsgemäß wird die Aufgabe dadurch gelöst, dass ein Infrarot-Emitter und eine Empfangseinrichtung zur Messung einer Transparenz der Linse vorgesehen sind, wobei bei verringerter Transparenz von der Auswerteeinheit eine Leistung des Infrarot-Emitters zur Überwachung des Nahbereichs steigerbar ist.

Der Kerngedanke der Erfindung besteht darin, dass von einem Infrarot-Emitter ein Infrarotstrahl durch die Linse hindurch geschickt wird. Aufgrund der Brechung der elektromagnetischen Infrarotwellen am Übergang der Linse zur umgebenden Atmosphäre wird an dieser Grenzfläche ein geringer Teil der elektromagnetischen Infrarotwellen reflektiert und in den Sensor zurückgeworfen. Im Sensor ist eine Empfangseinrichtung für diese an der Grenzfläche reflektierten Infrarotstrahlen vorgesehen, die die Intensität dieser reflektierten Infrarotstrahlen messen kann. Hierbei ist in der zugeordneten Auswerteeinheit ein Sollwert für den Anteil reflektierter Infrarotstrahlen bei sauberer Linse, gegebenenfalls mit zugehörigen Toleranzwerten, abgespeichert. In der Auswerteeinheit erfolgt ein Vergleich des Messsignals der Empfangseinrichtung mit diesem abgespeicherten Wert. Liegt das Signal der Empfangseinrichtung innerhalb der Toleranzgrenzen, wird die Linse als unverschmutzt eingestuft und der Sensor kann im normalen Betrieb zur Überwachung des Nahbereichs an dem Kraftfahrzeug betrieben werden. Ist auf der Linse eine Verschmutzung abgelagert, erhöht sich der Anteil der reflektieren Infrarotwellen, da die Verschmutzungen üblicherweise die Infrarotstrahlen nicht nach außen aus dem Sensor austreten lassen sondern diese reflektieren. Die durch Verschmutzungen verursachte Erhöhung des Anteils der reflektierten Infrarotstrahlen wird von der Empfangseinrichtung erfasst und dementsprechend von der Auswerteeinheit die Linse als verschmutzt eingestuft.

Ist dies der Fall, wird von der Auswerteeinheit die Leistung des Infrarot-Emitters, mit dem die Infrarotstrahlen zur Überwachung des Nahbereichs an einem Kraftfahrzeug ausgesendet werden, so lange erhöht, bis die ursprüngliche Leistungsfähigkeit des Sensors wieder hergestellt ist. Dabei kann von der Auswerteeinheit aus dem Grad der Verschmutzung, d. h. der Erhöhung des reflektierten Anteils der Infrarotstrahlen, darauf geschlossen werden, um welches Maß die Leistung des Infrarot-Emitters erhöht werden muss, um die Verschmutzung auszugleichen.

Im Rahmen der Erfindung ist es mitumfasst, sowohl die Infrarotstrahlen zur Erfassung des Verschmutzungsgrades der Linse als auch die Infrarotstrahlen zur Überwachung des Nahbereichs an einem Kraftfahrzeug vom selben Infrarot-Emitter auszusenden. Hierzu kann dieser Infrarot-Emitter z. B. in zwei aufeinander folgenden unterschiedlichen Betriebsarten betrieben werden. Zuerst werden Infrarotstrahlen geringerer Intensität zur Erfassung der Verschmutzung der Linse ausgesandt und nachfolgend die eigentlichen Infrarotstrahlen zur Überwachung. Ebenso ist es möglich, dass die Empfangseinrichtung sowohl die an dem Übergang der Linse zur umgebenden Atmosphäre reflektierten Infrarotstrahlen empfängt und nachfolgend die von eventuell im Nahbereich vorhandenen Objekten reflektierten Infrarotstrahlen. Bevorzugt werden diese Aufgaben aber, wie im Folgenden beschrieben, von unterschiedlichen Infrarot-Emittern und Empfangseinrichtungen übernommen.

Der Vorteil der Erfindung liegt darin, dass eine Verschmutzung des Sensors bzw. seiner Linse zuverlässig gemessen werden kann, um im nachfolgenden Betrieb des Überwachens des Nahbereichs durch eine gesteigerte Leistung des Infrarot-Emitters dennoch Infrarotstrahlen ausreichender Intensität aussenden und empfangen zu können. Somit ist auch bei einem stark verschmutzten Kraftfahrzeug unter Verwendung des Sensors das sichere Öffnen und Schließen eines Verdecks gewährleistet.

In einer vorteilhaften Ausgestaltung ist die Leistung des Infrarot-Emitters um bis zu 40% steigerbar, ausgehend von einem Normalbetrieb mit sauberer Linse. Selbstverständlich verfügt der Infrarot-Emitter über eine entsprechende Leistungsfähigkeit, um von der Auswerteeinheit zur Abgabe von Infrarotstrahlen höherer Intensität angesteuert zu werden. Sollte diese Leistungssteigerung dennoch nicht ausreichend sein, um einen Infrarotschleier der notwendigen Intensität zu erzeugen, da die Linse zu stark verschmutzt ist, kann von der Auswerteeinheit ein Signal, z. B. über in der Kraftfahrzeugtechnik bekannte Datenbusarchitekturen, an ein zentrales Steuergerät übermittelt werden, das daraufhin das Öffnen oder Schließen des Verdecks abbricht.

Bevorzugt ist im Sensor ein eigener Infrarot-Emitter zur Messung der Transparenz der Linse vorgesehen. Hierzu kann beispielsweise ein Infrarot-Emitter geringerer Leistungsfähigkeit verwendet werden, da lediglich ein Reflektionsvermögen am Übergang der Linse zur umgebenden Atmosphäre gemessen werden muss. Außerdem ist somit ein quasi-paralleler Betrieb möglich, d. h. zunächst wird beim Einschalten des Sensors oder in vorgegebenen Intervallen durch einen separaten Infrarot-Emitter der Verschmutzungsgrad der Linse gemessen, um gegebenenfalls im Betrieb die Leistung des Infrarot-Emitters zur Überwachung zu steigern, und nach der Messung erfolgt die Überwachung des Nahbereichs mit einer ggfls. korrigierten Leistung des Infrarot-Emitters. Insbesondere ist vorgeschlagen, dass mehrere Infrarot-Emitter zur Messung der Transparenz der Linse im Sensor vorgesehen sind, um die Sauberkeit der Linse an unterschiedlichen Orten überwachen zu können.

In gleicher Weise ist eine eigene Empfangseinrichtung zur Messung der Transparenz der Linse im Sensor vorgesehen, um auch hier einen quasi-parallelen Betrieb zu ermöglichen. Ebenso können mehrere derartige Empfangseinrichtungen zur Überwachung der Sauberkeit der Linse an unterschiedlichen Orten vorhanden sein.

In Ausgestaltung weisen ein Empfangsbereich und ein Sendebereich des Sensors jeweils einen Infrarot-Emitter und eine Empfangseinrichtung auf. Damit ist die Detektion einer Verschmutzung der Linse im jeweiligen Bereich des Sensors getrennt möglich.

Bevorzugt beaufschlagt die Auswerteeinheit zur Messung der Transparenz der Linse den Infrarot-Emitter des Sendebereichs und den Infrarot-Emitter des Empfangsbereichs mit einer gegenüber dem Normalbetrieb geringeren Leistung. Eine Verschmutzung der Linse im Empfangsbereich und/oder Sendebereich des Sensors führt damit zu einer Reflektion der jeweils ausgesendeten Infrarotwellen zu der entsprechenden Empfangseinrichtung. Nach einer Weiterbildung beaufschlagt die Auswerteeinheit den Infrarot-Emitter des Sendebereichs in Abhängig-keit von dem Ergebnis der Messung der Transparenz der Linse mit einer dem Normalbetrieb entsprechenden oder einer demgegenüber gesteigerten Leistung. Hierdurch ist die Erfassung eines Objektes im Nahbereich auch bei einer geringfügigen Verschmutzung der Linse sichergestellt.

Zweckmäßigerweise ist die Empfangseinrichtung für die an der Linse reflektierten und/oder die außerhalb des Sensors von einem Objekt reflektierten Infrarotstrahlen jeweils eine Photodiode. Derartige Photodioden sind dem Fachmann bekannt und können von ihm mit den jeweils gewünschten Empfindlichkeiten zur Überwachung der unterschiedlichen reflektierten Infrarotstrahlen ausgestaltet werden.

Zur Erhöhung der Zuverlässigkeit des Sensors verfügen die einzelnen Bauteile, d. h. Infrarot-Emitter, Empfangseinrichtungen und die Auswerteeinheit, jeweils über eine Temperaturstabilisierung, die beispielsweise auf schaltungstechnischem Wege realisiert ist. Somit treten keine Verfälschungen der Messergebnisse durch Temperaturschwankungen auf bzw. durch die Erwärmung der einzelnen Bauteile im Dauerbetrieb.

Zur optimalen Überwachung eines Nahbereichs an einem Kraftfahrzeug, insbesondere entlang einer Längsseite, ist der Sensor in einem Außenspiegel eines Kraftfahrzeugs integriert, um beispielsweise vom Außenspiegel in Fahrtrichtung gesehen nach hinten einen Infrarotschleier entlang des Kraftfahrzeugs zu erzeugen. Hierbei ist der Sensor insbesondere unterhalb der eigentlichen Spiegelfläche des Außenspiegels angeordnet und im Gehäuse des Außenspiegels eingebaut.

Wird von der Auswerteeinheit eine Verschmutzung der Linse festgestellt und dementsprechend die Leistung des Infrarot-Emitters erhöht, kann gleichzeitig über ein Steuergerät im Kraftfahrzeug ein Warnsignal ausgegeben werden, um den Nutzer auf den Umstand der verschmutzten Linse hinzuweisen. Dies kann beispielsweise optisch und/oder akustisch erfolgen und zwar unter anderem durch ein Aufleuchten beispielsweise der Blinker oder die Ausgabe einer Sprachmitteilung. Ebenso ist es möglich, dass über die vom Nutzer mitgeführte Fernbedienung ein entsprechendes Warnsignal ausgegeben wird.

Zur Entfernung der Verunreinigung auf der Linse des Sensors kann, falls von der Auswerteeinheit eine Verschmutzung festgestellt wird, auch eine dem Sensor zugeordnete Reinigungseinrichtung, wie eine Spritzdüse für Wasser und/oder ein der Linse zugeordneter Scheibenwischer aktiviert werden, um die Verunreinigung von der Linse zu entfernen.

Es versteht sich, dass die vorstehend genannten und nachstehend noch zu erläuternden Merkmale nicht nur in der jeweils angegebenen Kombination sondern auch in anderen Kombinationen verwendbar sind. Der Rahmen der Erfindung ist nur durch die Ansprüche definiert.

Die Erfindung wird im Folgenden anhand zweier Ausführungsbeispiele unter Bezugnahme auf die zugehörigen Zeichnungen näher erläutert. Es zeigt:

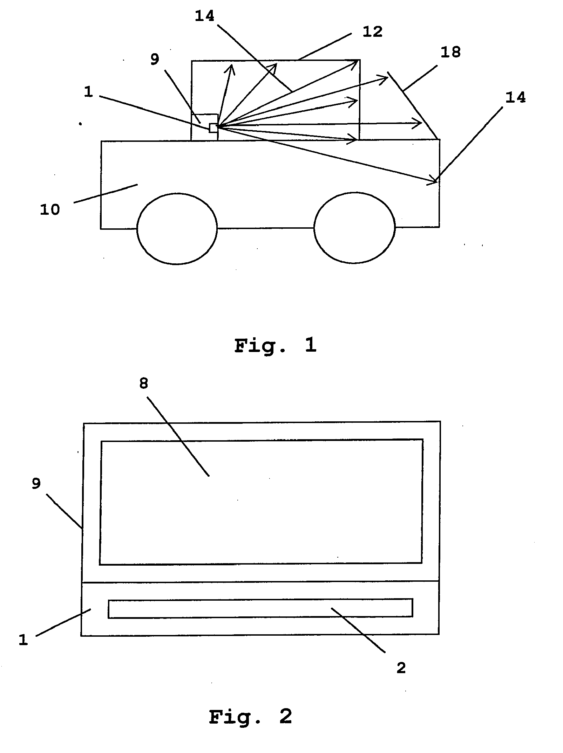

- Fig.1: in schematischer Darstellung eine Seitenansicht eines Kraftfahrzeugs mit einem Außenspiegel mit einem integrierten erfindungsgemäßen Sensor,
- Fig.2: eine vergrößerte Vorderansicht des Außenspiegels nach Fig. 1,
- Fig.3: eine vergrößerte Einzeldarstellung des Sensors nach Fig. 1 und
- Fig.4: eine vergrößerte Einzeldarstellung des Sensors nach Fig. 1 in alternativer Ausgestaltung.

Das Kraftfahrzeug 10 verfügt über einen Außenspiegel 8, der in einem Gehäuse 9 angeordnet ist. Zusätzlich ist in dem Gehäuse 9 ein Sensor 1 zur Überwachung des Nahbereichs an dem Kraftfahrzeug 10 integriert. Dieser Sensor 1 sendet, wie durch Pfeile 14 verdeutlicht, Infrarotstrahlen aus, um das Vorhandensein eines Objekts 13 in dem vom Sensor 1 überwachten Nahbereich festzustellen. Hierzu verfügt der Sensor 1 über eine Empfangseinrichtung 4, mit der die von einem Infrarot-Emitter 3 im Sensor 1 ausgehenden und an dem Objekt 13 reflektierten Infrarotstrahlen erfasst werden. Wird von einer Auswerteeinheit 5 im Sensor 1 das Vorhandensein eines Objekts 13 in diesem Nahbereich festgestellt, dann wird ein Öffnungs-oder Schließvorgang eines Verdecks 12 oder einer heckseitigen Verdeckabdeckklappe 18 des Kraftfahrzeugs 10 unterbrochen, um insbesondere eine Verletzung von Personen durch das sich öffnende oder schließende Verdeck 12 oder die verschwenkende Verdeckabdeckklappe 18 zu vermeiden. Der Sensor 1 ist in dem Gehäuse 9 unterhalb des Außenspiegels 8 angeordnet und verfügt über eine Linse 2, die für Infrarotstrahlen transparent ist. Mit dieser Anordnung des Sensors 1 ist eine Überwachung des seitlichen Bereichs des Kraftfahrzeugs 10 möglich.

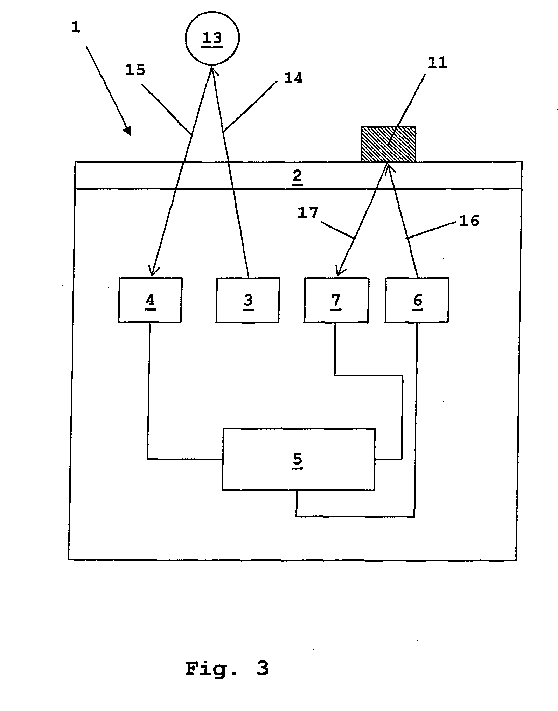

Aus Fig. 3 ist der grundsätzliche Aufbau des Sensors 1 zur Überwachung des Nahbereichs an dem Kraftfahrzeug 10 ersichtlich. Der Sensor 1 umfasst den Infrarot-Emitter 3, mit dem Infrarotstrahlen ausreichender Intensität zur Überwachung des Nahbereichs ausgesandt werden. Dem Infrarot-Emitter 3 ist die Empfangseinrichtung 4 zur Erfassung der von dem vorhandenen Objekt 13 reflektierten Infrarotstrahlen, wie durch die Pfeile 14, 15 veranschaulicht, zugeordnet. Das Messsignal der Empfangseinrichtung 4 wird einer Auswerteeinheit 5 zugeführt, die beispielsweise durch eine Erhöhung des reflektierten Anteils der Infrarotstrahlen feststellt, dass sich ein Objekt 13 im Nahbereich befindet und ein Signal zur Unterbrechung eines Öffnungs- oder Schließvorgangs des Verdecks 12 an ein zentrales Steuergerät 19 im Kraftfahrzeug 10 weiterleitet.

Zusätzlich ist im Sensor 1 ein weiterer Infrarot-Emitter 6 zur Überwachung der Verschmutzung der Linse 2 vorgesehen. Am Übergang der Linse 2 zur umgebenden Atmosphäre findet eine geringfügige Reflektion der Infrarotstrahlen statt, wie durch die Pfeile 16, 17 angedeutet. Diese reflektierten Infrarotstrahlen werden mit einer weiteren Empfangseinrichtung 7 erfasst. Sollte sich auf der Linse 2 eine Verschmutzung 11, z. B. ein Schlammspritzer, befinden, wird hierdurch das Reflektionsverhalten an der Grenze zwischen Linse 2 und der Atmosphäre verändert und von der Empfangseinrichtung 7 dementsprechend ein anderes Messsignal an die Auswerteeinheit 5 weitergeleitet. Die Verschmutzung 11 ruft dabei auch eine Dämpfung der Intensität der vom Infrarot-Emitter 3 zur Überwachung ausgesandten Infrarotstrahlen hervor.

Die Auswerteeinheit 5 stellt das Vorhandensein der Verschmutzung 11 fest und steuert dementsprechend den Infrarot-Emitter 3 mit einer um bis zu 40% erhöhten Leistung an, um dessen Infrarotstrahlen trotz der vorhandenen Verschmutzung 11 mit einer ausreichenden Intensität in den Nahbereich um das Kraftfahrzeug 10 herum auszusenden. Das bedeutet, dass die durch eine Verschmutzung 11 auf der Linse 2 verursachte Dämpfung der Infrarotstrahlen des Infrarot-Emitters 3 ausgeglichen wird.

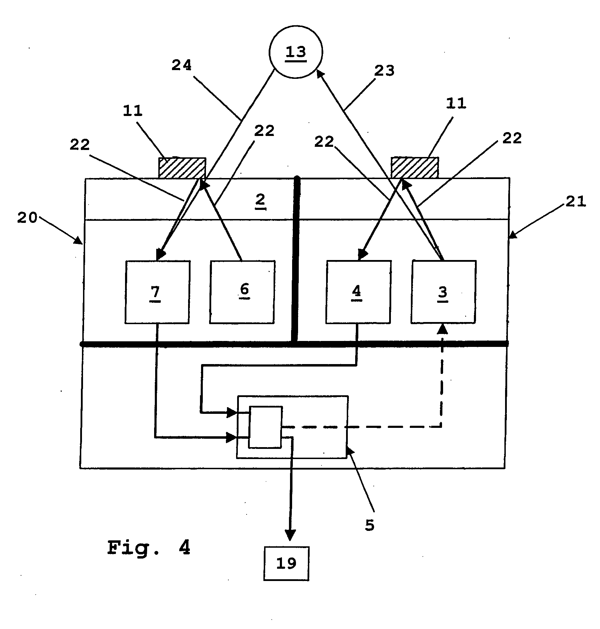

Der Sensor 1 nach Fig. 4 weist einen Empfangsbereich 20 und einen Sendebereich 21 auf, denen jeweils ein Infrarot-Emitter 3, 6 und eine Empfangseinrichtung 4, 7 zugeordnet sind. Zur Messung der Verschmutzung 11 der Linse 2 wird jeder der Infrarot-Emitter 3, 6 über die Auswerteeinheit 5 mit einer relativ geringen Leistung beaufschlagt. Die von den Infrarotemittern 3, 6 ausgesandten Infrarotstrahlen werden, wie durch die Pfeile 22 angedeutet, am Übergang der Linse 2 zur umgebenden Atmosphäre reflektiert und die reflektierten Infrarotstrahlen durch die entsprechenden Empfangseinrichtungen 4, 7 erfasst, die korrespondierende Signale an die Auswerteeinheit 5 übermitteln. Darauf stellt die Auswerteeinheit 5 ggfls. das Vorhandensein einer Verschmutzung 11 auf der Linse 2 fest und steuert den Infrarot-Emitter 3 des Sendebereichs 21 mit einer Leistung an, um dessen Infrarotstrahlen (Pfeil 23) mit einer zur Erfassung des Objektes 13 ausreichenden Intensität auszusenden, wobei von dem Objekt 13 reflektierte Infrarotstrahlung gemäß dem Pfeil 24 von der Empfangseinrichtung 7 im Empfangsbereich 20 erfasst wird.

Es versteht sich, dass jeweils mehrere Infrarot-Emitter 6 und/oder Empfangseinrichtungen 7 im Sensor 1 vorgesehen sein können, um die Sauberkeit der Linse 2 an verschiedenen Stellen kontrollieren zu können.

### Bezugszeichenliste

- 1: Sensor
- 2: Linse
- 3: Infrarot-Emitter
- 4: Empfangseinrichtung
- 5: Auswerteeinheit
- 6: Infrarot-Emitter
- 7: Empfangseinrichtung
- 8: Außenspiegel
- 9: Gehäuse
- 10: Kraftfahrzeug
- 11: Verschmutzung
- 12: Verdeck
- 13: Objekt
- 14: Pfeil
- 15: Pfeil
- 16: Pfeil
- 17: Pfeil
- 18: Verdeckabdeckklappe
- 19: Steuergerät
- 20: Empfangsbereich
- 21: Sendebereich
- 22: Pfeil
- 23: Pfeil
- 24: Pfeil

## Patentansprüche

1. Sensor zur Überwachung des Nahbereichs an einem Kraftfahrzeug (10) mit einem hinter einer Linse (2) angeordneten Infrarot-Emitter (3) und einer Empfangseinrichtung (4) für reflektierte Infrarotstrahlen und mit einer Auswerteeinheit (5) zur Erfassung des Vorhandenseins eins Objekts (13) im Nabereich, wobei von der Auswerteeinheit (5) ein Signal an ein Steuergerät (19) im Kraftfahrzeug (10) weiterleitbar ist, **dadurch gekennzeichnet, dass** ein Infrarot-Emitter (6) und eine Empfangseinrichtung (7) zur Messung einer Transparenz der Linse (2) vorgesehen sind, wobei bei verringerter Transparenz von der Auswerteeinheit (5) eine Leistung des Infrarot-Emitters (3) zur Überwachung des Nahbereichs steigerbar ist.

2. Sensor nach Anspruch 1, **dadurch gekennzeichnet, dass** die Leistung des Infrarot-Emitters (3) um bis zu 40% steigerbar ist, ausgehend vom Normalbetrieb.

3. Sensor nach Anspruch 1 oder 2, **dadurch gekennzeichnet, dass** ein eigener Infrarot-Emitter (6) zur Messung der Transparenz der Linse (2) vorgesehen ist, insbesondere mehrere.

4. Sensor nach einem der Ansprüche 1 bis 3, **dadurch gekennzeichnet, dass** eine eigene Empfangseinrichtung (7) zur Erfassung der Transparenz der Linse (2) vorgesehen ist, insbesondere mehrere.

5. Sensor nach einem der Ansprüche 1 bis 4, **dadurch gekennzeichnet, dass** ein Empfangsbereich (20) und ein Sendebereich (21) des Sensors (1) jeweils einen Infrarot-Emitter (3, 6) und eine Empfangseinrichtung (4, 7) aufweisen.

6. Sensor nach Anspruch 5, **dadurch gekennzeichnet, dass** die Auswerteeinheit (5) zur Messung der Transparenz der Linse (2) den Infrarot-Emitter (3) des Sendebereichs (21) und den Infrarot-Emitter (6) des Empfangsbereichs (20) mit einer gegenüber dem Normalbetrieb geringeren Leistung beaufschlagt.

7. Sensor nach Anspruch 5 oder 6, **dadurch gekennzeichnet, dass** die Auswerteeinheit (5) den Infrarot-Emitter (3) des Sendebereichs (21) in Abhängigkeit von dem Ergebnis der Messung der Transparenz der Linse (2) mit einer dem Normalbetrieb entsprechenden oder einer demgegenüber gesteigerten Leistung beaufschlagt.

8. Sensor nach einem der Ansprüche 1 bis 7, **dadurch gekennzeichnet, dass** die Empfangseinrichtung (4, 7) eine Photodiode ist.

9. Sensor nach einem der Ansprüche 1 bis 8, **dadurch gekennzeichnet, dass** er temperaturstabilisiert ist.

10. Sensor nach einem der Ansprüche 1 bis 9, **dadurch gekennzeichnet, dass** er in ein Gehäuse (9) eines Außenspiegels (8) des Kraftfahrzeugs (10) integriert ist, insbesondere unterhalb des Außenspiegels (8).

11. Sensor nach einem der Ansprüche 1 bis 10, **dadurch gekennzeichnet, dass** ein Warnsignal ausgebbar ist.

12. Sensor nach einem der Ansprüche 1 bis 11, **dadurch gekennzeichnet, dass** eine der Linse (2) zugeordnete Reinigungseinrichtung aktivierbar ist.
